# EUROPÄISCHE PATENTANMELDUNG

(11) **EP 2 018 932 A1**
(43) Veröffentlichungstag der Anmeldung: **28.01.2009**
(21) Anmeldenummer: 07021737.7
(22) Anmeldetag: 08.11.2007
(51) Int. Cl.: B23K 26/12, B23K 26/14

(54) **Verfahren zum Laserfügen**

(30) Priorität: 26.07.2007 DE 102007035394; 26.07.2007 DE 102007035404
(71) Anmelder: Linde Aktiengesellschaft, 80807 München (DE)
(72) Erfinder: Danzer, Wolfgang Dr., 84405 Dorfen (DE)

(57) **Zusammenfassung**

Die Erfindung betrifft ein Verfahren zum Laser-Fügen eines Werkstücks, bei dem ein Laserstrahl und ein Prozessgas an die Bearbeitungsstelle geleitet wird, wobei der Volumenstrom und/oder die Zusammensetzung des Prozessgases während des Schweißvorgangs mehrmals verändert wird.

## Beschreibung

Die vorliegende Erfindung betrifft ein Verfahren zum Laserfügen eines Werkstücks, bei dem ein Laserstrahl und ein Prozessgas an die Bearbeitungsstelle geleitet wird.

Unter dem Begriff Laser-Fügen werden bekanntlich Laser-Schweißverfahren und Laser-Hartlötverfahren (Hartlöten, engl.: brazing, franz.: brasage fort) zusammengefasst.

Die Eigenschaften der Laserstrahlung, besonders die Intensität und gute Fokussierbarkeit, haben dazu geführt, dass Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf.

Unter einem fokussierten Laserstrahl wird im Rahmen der Erfindung ein im Wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Laserstrahlung oder mit Fokussierung auf zwei oder mehr Foki angewandt werden.

Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden daher technische Gase als Prozessgase eingesetzt, um diese Materialbearbeitungsprozesse effektiver, schneller und/oder mit verbesserter Qualität durchführen zu können.

Zum Beispiel beim Laserschweißen erfüllen Prozessgase verschiedene Aufgaben, wie beispielsweise die Kontrolle und Reduzierung des Plasmas, das sich bei hohen Laserleistungen ausbilden und die Energieeinkopplung massiv stören kann. Dies ist z.B. aus der Veröffentlichung "Laser im Nebel", Dr. W. Danzer und K. Behler, Zeitschrift LASER, Ausgabe 1/87, Seiten 32 bis 36 bekannt. Andere Aufgaben wie der Schutz vor Oxidation, eine metallurgische Optimierung und/oder eine Maximierung der Geschwindigkeit und Qualität der Materialbearbeitung werden ebenfalls durch den Einsatz bestimmter Prozessgase erfüllt. Besonders vorteilhafte Prozessgaszusammensetzungen werden z.B. in den Dokumenten EP 1 022 086 A2 und EP 1 279 461 A2 angegeben.

Das Dokument DE 39 27 451 C1 offenbart einen Versuch die Prozessgaswirkung beim Laserbearbeiten durch den Einsatz eines turbulent strömenden Prozessgasstromes weiter zu verbessern.

Der vorliegenden Erfindung liegt die Aufgabe zugrunde ein weiter verbessertes Verfahren zum Laserschweißen und Laserhartlöten zur Verfügung zu stellen, durch das die Protzesstabilität verbessert und/oder die maximal realisierbare Schweißgeschwindigkeit erhöht sowie eine hohe Schweißqualität erreicht wird.

Die gestellte Aufgabe wird dadurch gelöst, dass der Volumenstrom und/oder die Zusammensetzung des Prozessgases während des Schweißvorgangs mehrmals verändert wird.

Das erfindungsgemäße Verfahren eignet sich allgemein zum Laserfügen, also zum Laserschweißen und Laserhartlöten. Insbesondere eignet es sich zum Laser-Tiefschweißen. Beim Laserschweißen (Wärmeleitungsschweißen und Tiefschweißen) und Laserlöten mit Prozessgas wird mit Vorteil ein fokussierter Laserstrahl eingesetzt und ein den Laserstrahl umhüllender Prozessgasstrom wird gegen die Werkstückoberfläche geleitet. Das Prozessgas wechselwirkt insbesondere mit dem Schmelzbad. Beim Laser-Tiefschweißen bildet sich dabei eine Dampfkapillare, ein sog. Keyhole, aus, in welches das Prozessgas eindringt und an dessen Entstehung und Ausgestaltung das Prozessgas wesentlich beeinflusst.

Zur Lasermaterialbearbeitung werden bevorzugt CO₂- oder Neodym:YAG-Laser sowie Dioden-, Faser- oder Scheibenlaser eingesetzt.

Durch die Änderung des Gasvolumenstroms wird vorteilhafterweise die Schmelze in Schwingung versetzt, worauf wohl die Erhöhung der Protzesstabilität zurückzuführen ist. Auch das Ausgasen des Schweißbads bzw. des flüssigen Zusatzmaterials wird begünstigt. Dadurch wird die Qualität der Verbindung verbessert und insbesondere die Porenbildung vermindert. Mit dem erfindungsgemäßen Verfahren ist somit ein prozesssicheres und qualitativ hochwertiges Fügen möglich. Des Weiteren erhöht der durch die zeitliche Veränderung des Gasvolumenstroms pulsierende Prozessgasstrom vorteilhaft die maximal realisierbare Schweißgeschwindigkeit, mit besonderem Vorteil ohne die Streckenenergie, d.h. den Energieeintrag in das Werkstück pro Länge der Schweißnaht, signifikant zu erhöhen.

Durch die Änderung der Zusammensetzung des Prozessgases wird die Prozesstabilität erhöht. So wird durch die Zusammensetzungsänderung, da unterschiedliche Stoffe bzw. Gase aufgrund ihrer verschiedenen physikalischen Kennwerten in unterschiedlichem Maße Energie in die Bearbeitungsstelle einbringen, die thermische Wechselwirkung des Prozessgase mit der Schmelze einer zeitlichen Änderung unterworfen, welche wohl Ursache der erhöhten Prozessgasstabilität ist. Entsteht, wie beim Laser-Tiefschweißen, aus Prozessgas und Werkstoff ein Plasma, wird auch das Plasma durch die zeitliche Änderung der thermischen Einwirkung einer zeitlichen Änderung unterworfen, die sich vorteilhaft auf die Prozessstabilität und die Qualität auswirkt. Die Änderung der Zusammensetzung des Prozessgases wirkt sich auch vorteilhaft auf die Bearbeitungsgeschwindigkeit aus. Mit dem erfindungsgemäßen Verfahren ist es somit für das Laserfügen möglich, die Qualität der Verbindung zu verbessern oder/und die Fügegeschwindigkeit zu erhöhen.

Der Bezug auf eine mehrmalige zeitliche Änderung soll dazu dienen die vorliegende Erfindung von einfachen Aus- und Einschaltvorgängen am Beginn und am Ende eines Fügeprozesses sowie von einfachen Spülvorgängen klar abzugrenzen. Unter mehrmalig ist dabei mindestens 10 mal, bevorzugt mindestens 20 mal, besonders bevorzugt mindestens 50 mal zu verstehen. Mit besonderem Vorteil werden die beschriebenen Änderungsvorgänge während der gesamten Dauer eines Fügeprozesses durchgeführt.

Die Änderung des Gasvolumenstroms kann z.B. durch abwechselndes Aus- und Einschalten des Prozessgasstroms erzeugt werden, wobei die Dauer des ausgeschalteten Zustandes zum eingeschalteten Zustand gleich- oder verschiedenlang ausgebildet sein kann. Statt dem Aus- und Einschalten kann auch lediglich ein Vermindern und wieder Erhöhen des Durchflusses durch eine Zuleitung für das Prozessgas durchgeführt werden. In einer besonders vorteilhaften Ausgestaltung der Erfindung wird der Volumenstrom aus- und eingeschalten. Bei dieser, sehr einfach auszuführenden Ausgestaltung der Erfindung zeigen sich die erfindungsgemäßen Vorteile in besonders hervorgehobener Weise.

Die Veränderung der Zusammensetzung umfasst hierbei sowohl ein Aus- und Einschalten von zumindest einer Komponente als auch ein mehrmaliges zeitweiliges Vermindern von mindestens einer Komponente. So wird beispielsweise bei einem Gemisch aus den Komponenten A und B zeitweise nur die Komponente A zugeführt wird. Die Komponente A wird also periodisch wiederholt aus- und wieder eingeschalten. Die Komponente B kann dann beispielsweise ebenfalls aus- und wieder eingeschalten werden, wobei das Aus- und Einschalten der Komponente B zum Aus-und Einschalten der Komponente A zeitlich versetzt ist, wobei es insbesondere derartig zeitlich versetzt ist, dass die Komponenten A und B sich abwechseln. Beispielsweise ist es auch möglich, dass die Komponente A aus- und eingeschaltet und währenddessen die Komponente B unverändert zugeführt wird. Oder, als weitere beispielhafte Möglichkeit, die Komponente A aus- und einzuschalten und gleichzeitig die Komponente B zu vermindern. Möglich ist es beispielsweise auch, die Komponente A oder B zeitweise ungleichmäßig zueinander zu vermindern, so dass sich die Zusammensetzung ändert. Es können auch Gemische mit mehr als zwei Komponenten eingesetzt werden, wobei dann entweder nur ausgewählte oder alle Komponenten nacheinander oder/und gleichzeitig aus- und eingeschalten oder lediglich im Volumenstrom zeitweise vermindert werden können, wobei die Änderung im Volumenstrom einer oder mehrerer Komponenten in einer Änderung der Zusammensetzung mündet. Dabei ist es stets so, dass zumindest eine Komponente zumindest in verminderter Menge an die Bearbeitungsstelle geführt wird. Eine Komponente des Schneidgases kann dabei unter Umständen auch aus einer Gasmischung und nicht aus einem einzigen Gas bestehen, so dass anstelle von Komponenten auch von Teilströmen gesprochen werden kann.

In besonders vorteilhafter Ausgestaltung der Erfindung wird die Änderung der Zusammensetzung durch ein abwechselndes Aus- und Einschalten von Teilströmen für die Prozessgaskomponenten erzeugt, wobei die Dauer des ausgeschalteten Zustandes zum eingeschalteten Zustand gleichlang ausgebildet ist. Es ist jedoch auch möglich, die beiden Zeiten zueinander verschiedenlang auszubilden. Statt dem wiederholten Aus- und Einschalten kann auch lediglich eine Vermindern und wieder Erhöhen des Durchflusses durch eine oder mehrere Zuleitungen für die einzelnen Komponenten des Prozessgases durchgeführt werden.

Vorteilhafterweise wird die Änderung der Zusammensetzung und/oder desVolumenstroms periodisch durchgeführt. Insbesonders wird die Änderung des Volumenstroms des Prozessgases vorteilhafterweise mit einer konstanten Periode durchgeführt.

Bevorzugt enthält das Prozessgas Argon, Helium, Stickstoff, Kohlendioxid, Sauerstoff und/oder Wasserstoff. Verwendet werden insbesondere Ein- und Zwei-Komponentenmischungen, aber auch Drei- und Mehr-Komponentenmischungen können eingesetzt werden.

In einer vorteilhaften Ausgestaltung der Erfindung wird eine Änderung der Zusammensetzung bei gleichbleibendem Volumenstrom durchgeführt.

Gemäß einer anderen, vorteilhaften Ausführungsform der Erfindung wird eine Änderung des Volumenstroms bei gleichbleibender Zusammensetzung durchgeführt.

Gemäß einer weiteren, vorteilhaften Ausführungsform der Erfindung wird Volumenstrom und Zusammensetzung des Prozessgases während des Schweißvorgangs mehrmals verändert. Insbesondere zeigt sich dabei, dass die Änderung der Zusammensetzung bei gleichzeitiger Änderung des Volumenstroms dabei die vorteilhaften Effekte verstärkt, die die Änderung des Volumenstroms hervorruft.

Insbesondere erfolgt die Änderung des Volumenstroms vorteilhafterweise mit einer konstanten Amplitudenänderung.

Gemäß einer besonders vorteilhaften Ausgestaltung der Erfindung wird die Änderung des Volumenstroms und/oder der Zusammensetzung des Prozessgases mit einem periodisch unverändert wiederkehrenden Verlauf durchgeführt. Die Änderung des Gasvolumenstroms über die Zeit kann z.B. zumindest zum Teil durch ein Rechteck-, Dreieck- oder Sinusprofil oder Kombinationen davon dargestellt werden. Die Änderung der Zusammensetzung z.B. eines zweikomponentigen Prozessgases kann beliebige Kurvenformen, besonders auch die oben genannten, annehmen. Dabei gilt es Darstellungen, bei denen auf der x- und y-Achse einer Darstellung jeweils eine Komponente des Prozessgases angetragen ist von Darstellungen, bei denen die Komponenten in y-Richtung und die Zeit in x-Richtung angetragen ist, zu unterscheiden. Für bestimmte Anwendungen kann auch ein periodisch modifiziert wiederkehrender Verlauf besonders vorteilhaft sein.

Zweckmäßigerweise wird der Gasvolumenstrom mittels eines veränderlichen Strömungsbegrenzers oder mittels eines steuerbaren Ventils verändert. Vorteilhaft wird z.B. ein stufenlos steuer- oder regelbares Ventil eingesetzt. Eine andere Möglichkeit ist es, dass mindestens ein weiterer Gasstrom entsprechend zugeschalten wird. Auch ein Bypass kann Anwendung finden.

Mit besonderem Vorteil wird auch die Zusammensetzung des Prozessgases mittels veränderlicher Strömungsbegrenzer oder mittels steuerbarer Ventile verändert. Vorteilhaft werden auch hier stufenlos steuer- oder regelbare Ventile eingesetzt, bevorzugt jeweils in den Zuleitungen für die einzelnen Komponenten des Prozessgases.

Mit besonderem Vorteil können piezoelektrische oder magnetische Ventile zum Einsatz kommen.

Gemäß einer Weiterbildung der vorliegenden Erfindung liegt die Frequenz für die periodische Wiederholung zwischen 0,5 und 500 Hz, vorzugsweise zwischen 1 und 100 Hz, besonders bevorzugt zwischen 3 und 30 Hz.

Gemäß einer anderen vorteilhaften Weiterbildung der Erfindung liegt die Frequenz für die periodische Wiederholung zwischen 500 und 8000 Hz, vorzugsweise zwischen 700 und 5000 Hz, besonders bevorzugt zwischen 1000 und 3000 Hz.

Gemäß einer vorteilhaften Ausgestaltung der Erfindung wird mit besonderem Vorteil die Änderung des Gasvolumenstroms so durchgeführt, dass eine stehende, schwingende Drucksäule entsteht. Der Volumenstrom bildet eine stehende Welle aus, so dass eine schwingende Drucksäule entsteht. Die stehende, schwingende Drucksäule ermöglicht eine optimale Druckverteilung und einen erhöhten Kraftübertrag auf das Werkstück. Dies stellt eine deutliche Verbesserung gegenüber den bekannten Verfahren dar. Insbesondere entsteht eine stehende, schwingende Drucksäule bei hohen Frequenzen, die bevorzugt zwischen 500 und 8000 Hz, besonders bevorzugt zwischen 700 und 5000 Hz, und ganz besonders bevorzugt zwischen 1000 und 3000 Hz liegen.

Durch geeignete Wahl der Kombinationsmöglichkeiten der erfindungsgemäßen Ausgestaltungen kann das Laser-Fügen mit besonderem Vorteil aufgabenspezifisch optimiert werden.

Die erfindungsgemäßen Vorteile zeigen sich in besonders ausgeprägter Weise, wenn die Verbindung durch Laserschweißen, insbesondere durch Lasertiefschweißen erzeugt wird. Die Vorteile der Erfindung zeigen sich jedoch auch beim Wärmeleitungsschweißen mit Laser und beim Laserstrahlhartlöten.

Beispielsweise wird ein Prozessgas beim Laserschweißen periodisch aus- und eingeschaltet. Das periodische Aus- und Einschalten erfolgt mit einer Frequenz aus dem Bereich 500 bis 8000 Hz, vorzugsweise zwischen 700 und 5000 Hz, besonders bevorzugt zwischen 1000 und 3000 Hz. Es ist auch möglich, das Prozessgas nicht aus- und einzuschalten sondern nur den Volumenstrom zu vermindern und wieder auf den Maximalwert beziehungsweise Ausgangswert zu erhöhen. Vorteilhafterweise ist die Taktung des Prozessgases hierbei so, dass eine stehende, schwingende Drucksäule entsteht, die an der Bearbeitungsstelle wirkt.

Gemäß einem weiteren Beispiel erfolgt das Ein- und Ausschalten des Prozessgasvolumenstroms mit Frequenzen im Bereich von 0,5 bis 500 Hz, vorzugsweise zwischen 1 und 100 Hz, besonders bevorzugt zwischen 3 und 30 Hz.

Beispielsweise kann somit bei einem Gemisch aus Gas A und Gas B als Prozessgas Gas A und Gas B periodisch wiederholt und abwechselnd aus- und wieder eingeschalten werden. Möglich ist dabei auch, durch zusätzliche Variation des Gesamtvolumenstroms des Prozessgases diese Vorgänge weiter zu optimieren. Zum Aus- und Einschalten des Gases A und/oder des Gases B wird z.B. besonders vorteilhaft ein piezoelektrisches Ventil eingesetzt, das für die bevorzugten Frequenzbereiche, die bereits genannt wurden, geeignet ausgelegt ist.

Gemäß einem weitern Beispiel wird bei einem Gemisch aus Gas A und Gas B als Prozessgas Gas A und/oder Gas B periodisch wiederholt vermindert werden, wobei der Anteil an Gas A im Prozessgas und damit die Zusammensetzung des Prozessgases verändert wird. Durch zusätzliche Variation des Gesamtvolumenstroms des Prozessgases können diese Vorgänge, falls gewünscht, weiter optimiert werden.

Auf ein Prozessgas, das am Bearbeitungsort aus zwei Komponenten gemischt wird, bezieht sich auch das nächste Beispiel. So kann bei einer Mischung aus beispielsweise Argon und Helium als Prozessgas Argon und/oder Helium periodisch wiederholt vermindert oder ausgeschalten werden, so dass sich Zusammensetzung und/oder Volumenstrom des Prozessgases an der Bearbeitungsstelle periodisch ändern.

## Patentansprüche

1. Verfahren zum Laserfügen eines Werkstücks, bei dem ein Laserstrahl und ein Prozessgas an die Bearbeitungsstelle geleitet wird, **dadurch gekennzeichnet, dass** der Volumenstrom und/oder die Zusammensetzung des Prozessgases während des Schweißvorgangs mehrmals verändert wird.

2. Verfahren nach Anspruch 1, **dadurch gekennzeichnet, dass** ein mindestens zwei Komponenten enthaltenes Prozessgas gegen die Werkstückoberfläche geleitet wird.

3. Verfahren nach Anspruch 2, **dadurch gekennzeichnet, dass** die Änderung der Zusammensetzung des Prozessgases durch mehrmaliges Aus- und Einschalten mindestens einer Komponente für die Prozessgaskomponenten erzeugt wird.

4. Verfahren nach einem der Ansprüche 1 bis 3, **dadurch gekennzeichnet, dass** der Volumenstrom aus- und eingeschalten wird.

5. Verfahren nach einem der Ansprüche 1 bis 4, **dadurch gekennzeichnet, dass** die Änderung des Volumenstroms und/oder der Zusammensetzung des Prozessgases periodisch durchgeführt wird.

6. Verfahren nach einem der Ansprüche 1 bis 5, **dadurch gekennzeichnet, dass** das Prozessgas Argon, Helium, Stickstoff, Kohlendioxid, Sauerstoff und/oder Wasserstoff enthält.

7. Verfahren nach einem der Ansprüche 1 bis 6, **dadurch gekennzeichnet, dass** ein magnetisches oder ein piezoelektrischs Ventil verändert wird.

8. Verfahren nach einem der Ansprüche 1 bis 7, **dadurch gekennzeichnet, dass** die Frequenz für die periodische Wiederholung zwischen 0,5 und 500 Hz liegt, vorzugsweise zwischen 1 und 100 Hz, besonders bevorzugt zwischen 3 und 30 Hz.

9. Verfahren nach einem der Ansprüche 1 bis 7, **dadurch gekennzeichnet, dass** die Frequenz für die periodische Wiederholung zwischen 500 und 8000 Hz liegt, vorzugsweise zwischen 700 und 5000 Hz, besonders bevorzugt zwischen 1000 und 3000 Hz.

10. Verfahren nach einem der Ansprüche 1 bis 9, **dadurch gekennzeichnet, dass** die Änderung des Gasvolumenstroms so durchgeführt wird, dass ein Gasstrahl in Form einer stehenden Welle ausbildet wird, der als Prozessgas eingesetzt wird.
